(19) Europäisches Patentamt / European Patent Office / Office européen des brevets

(11) **EP 2 511 675 A1**

(12) **EUROPEAN PATENT APPLICATION**

(43) Date of publication:
**17.10.2012 Bulletin 2012/42**

(51) Int Cl.:
*G01F 23/26* (2006.01)    *H01M 8/04* (2006.01)

(21) Application number: **12163611.2**

(22) Date of filing: **10.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.04.2011 KR 20110033374**

(71) Applicant: **Samsung SDI Co., Ltd.
Yongin-si, Gyeonggi-do (KR)**

(72) Inventors:
• **Hu, Lei
449-712 Gyeonggi-do (KR)**

• **Cho, Hye-jung
449-712 Gyeonggi-do (KR)**
• **Kim, Young-jae
449-712 Gyeonggi-do (KR)**
• **Na, Young-seung
Gyeonggi-do (KR)**

(74) Representative: **Zijlstra, Robert Wiebo Johan
Elkington and Fife LLP
Prospect House
8 Pembroke Road
Sevenoaks, Kent TN13 1XR (GB)**

(54) **Method and apparatus for measuring volume of liquid and fuel cell system**

(57)    The volume of liquid that remains in a liquid storage is calculated by measuring capacitances between several pairs of metal plates attached to each of several corresponding faces of the liquid storage and by combining liquid volumes corresponding to the capacitance based on the current position of the liquid storage. Such a method of measuring the volume of liquid can be used to measure the amount of fuel that remains in a fuel cell system.

FIG. 2

EP 2 511 675 A1

**Description**

BACKGROUND

The present disclosure relates to methods and apparatuses for measuring a volume of liquid, and more particularly, to methods and apparatuses for measuring the amount of fuel that remains in a fuel cell system.

Fuel cells have drawn attention together with solar cells and the like, as an eco-friendly replacement energy technology for generating electrical energy from material that is abundant on the earth, such as hydrogen, or the like. Fuel, water, air, and the like are to be supplied to fuel cells so as to generate power by using fuel cell systems. When the amount of these materials that are supplied is not appropriate, fuel cells may not operate normally. In particular, when fuel to be supplied to fuel cell systems is exhausted, the fuel cells cannot operate normally. Thus, the operation of the fuel cell systems is to be stopped before the fuel is exhausted. For this reason, research into measuring the amount of fuel that remains in fuel cell systems has been conducted.

SUMMARY OF THE INVENTION

Provided are methods and apparatuses for measuring a volume of liquid stored in a liquid storage accurately without generating bubbles in the liquid storage regardless of a position in which the liquid storage is disposed.

Also provided are computer-readable recording medium having recorded thereon a program for executing the methods.

Also provided are fuel cell systems using the methods or apparatuses.

Additional aspects will be set forth in part in the description which follows and, in part, will be apparent from the description, or may be learned by practice of the presented embodiments.

According to an aspect of the present invention, a method of measuring a volume of liquid, includes: receiving first capacitance between metal plates attached to a liquid storage and second capacitance between other metal plates attached to the liquid storage; obtaining a first liquid volume corresponding to the first capacitance and a second liquid volume corresponding to the second capacitance; and calculating a volume of liquid that remains in the liquid storage by combining a plurality of liquid volumes including the first liquid volume and the second liquid volume.

According to another aspect of the present invention, there is provided a computer-readable recording medium having recorded thereon a program for executing the method.

According to another aspect of the present invention, an apparatus for measuring a volume of liquid, includes: one pair of metal plates attached to a liquid storage for measurement of first capacitance; another one pair of metal plates attached to the liquid storage for measurement of second capacitance; and a processor calculating a volume of liquid that remains in the liquid storage based on the first capacitance and the second capacitance.

According to another aspect of the present invention, a fuel cell system includes: one pair of metal plates attached to a fuel storage for measurement of first capacitance; another one pair of metal plates attached to the fuel storage for measurement of second capacitance; and a controller calculating a volume of fuel that remains in the fuel storage based on the first capacitance and the second capacitance.

BRIEF DESCRIPTION OF THE DRAWINGS

These and/or other aspects will become apparent and more readily appreciated from the following description of the embodiments, taken in conjunction with the accompanying drawings of which:

FIG. 1 illustrates a structure of a fuel cell system according to an embodiment of the present invention;
FIG. 2 illustrates a structure of an apparatus for measuring a volume of liquid according to an embodiment of the present invention;
FIGS. 3A and 3B illustrate a case where a pouch is installed in a liquid storage illustrated in FIG. 2;
FIG. 4 illustrates several positions in which the liquid storage of FIG. 2 is disposed;
FIG. 5 is a graph of a change in measured values of capacitance of a channel A according to a change in the volume of liquid disposed in three positions illustrated in FIG. 4 in which the liquid storage of FIG. 2 is disposed;
FIG. 6 is a graph of a change in measured values of capacitance of a channel B according to a change in the volume of liquid disposed in the three positions illustrated in FIG. 4 in which the liquid storage of FIG. 2 is disposed;
FIG. 7 is a graph of a change in measured values of capacitance of the channel A according to a change in the volume of liquid including bubbles disposed in the three positions illustrated in FIG. 4 in which the liquid storage of FIG. 2 is disposed;
FIG. 8 is a graph of a change in the measured values of capacitance of the channel B according to a change in the volume of liquid including bubbles disposed in the three positions illustrated in FIG. 4 in which the liquid storage of FIG. 2 is disposed;

FIG. 9 is a flowchart illustrating a method of measuring a volume of liquid according to an embodiment of the present invention; and

FIG. 10 illustrates a structure of an apparatus for measuring a volume of liquid according to other embodiments of the present invention.

DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description. In the drawings, the thicknesses of layers and regions are exaggerated for clarity. The features of the following embodiments are associated with a new method of measuring a volume of liquid that remains in a liquid storage. Since the new method of measuring the volume of liquid that remains in the liquid storage represented in the following embodiments may be mainly used as a way to measure the amount of fuel that remains in a fuel cell system, the fuel cell system will now be described so as to describe the new method's efficiency and effects of measuring the volume of liquid that remains in the liquid storage.

The fuel cell system generally includes a fuel cell that generates power by using fuel, balance of plants (BOP) that are peripheral devices of the fuel cell for supplying fuel, water, air, or the like to the fuel cell, and a converter for converting power output from the fuel cell and supplying the power to load of the fuel cell. Since the features of the following embodiments are associated with detection of the amount of remaining fuel, a detailed description of a stack, a converter, or the like, which constitutes the fuel cell except for the BOP will not be provided here so as not to obscure the features of the present invention. In general, the fuel cell is designed in the form of a stack in which a plurality of cells are combined in series or in parallel to one another in corresponding to power required by a load of the fuel cell. Hereinafter, all stacks in which any plurality of cells are combined with each other, are briefly referred to as a fuel cell.

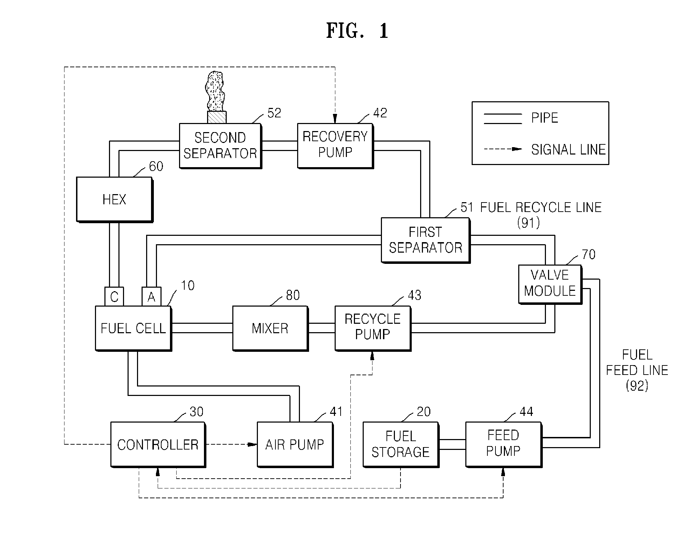

FIG. 1 illustrates a structure of a fuel cell system according to an embodiment of the present invention. Referring to FIG. 1, the fuel cell system according to the current embodiment includes a fuel cell 10, a fuel storage 20, a controller 30, an air pump 41, a water recovery pump 42, a recycle pump 43, a feed pump 44, a first separator 51, a second separator 52, a heat exchanger 60, a valve module 70, and a mixer 80. As described above, the above elements for supplying materials required for generation of power of the fuel cell 10, i.e., fuel, water, air, or the like, are referred to as BOP. As illustrated in FIG. 1, some pipes for connecting the above elements are installed among the BOP elements.

In addition, there may be other devices than the elements of FIG. 1 in the fuel cell system illustrated in FIG. 1. For example, a heat exchanger other than the heat exchanger 60 of FIG. 1 may be installed in a position different from a position in which the heat exchanger 60 is installed, for example, between the recycle pump 43 and the mixer 80, so as to recover heat generated in the fuel cell system. In addition, a concentration sensor for measuring concentration of the fuel supplied to the fuel cell 10 may be installed in a pipe installed between the fuel cell 10 and the mixer 80, and a thermistor may be installed on the surface of the fuel cell 10 so as to measure reaction heat generated in the fuel cell 10.

The fuel cell 10 is a power generation device that generates direct current (DC) power by converting chemical energy of the fuel stored in the fuel storage 20 directly into electrical energy by using an electrochemical reaction. Examples of the fuel cell 10 include a solid oxide fuel cell (SOFC), a polymer electrolyte membrane fuel cell (PEMFC), a direct methanol fuel cell (DMFC), and the like. In particular, the fuel cell system including BOP for operating a DMFC is illustrated in FIG. 1. Technical features that will be described below may be applied to various kinds of fuel cells.

In the DMFC, which is different from an indirect methanol fuel cell for reforming methanol to increase the concentration of hydrogen, methanol and water directly react with each other in an anode of the fuel cell 10 without a process of reforming methanol so that hydrogen ions and electrons may be generated. In this way, the DMFC does not require the process of reforming methanol and thus may be miniaturized. In addition, since methanol is in a liquid state at room temperature, the fuel is easily stored and moved. Thus, the DMFC is used in a portable fuel cell system.

In general, a reaction indicated by $CH_3OH + H_2O \rightarrow 6H^+ + 6e^- + CO_2$ occurs in the anode of the DMFC, and a reaction indicated by $3/2O_2 + 6H^+ + 6e^- \rightarrow 3H_2O$ occurs in a cathode of the DMFC. Protons $H^+$ are transferred via a proton exchange membrane in a fuel cell, and electrons are transferred from the anode to the cathode of the fuel cell via an external circuit. Power is generated by performing the above process. A catalyst exists in the DMFC so as to sallow a smooth reaction in the DMFC. Generally, the catalyst is formed of platinum and may be deteriorated when the temperature in the above-described reaction process is too high. Thus, pure methanol is not supplied to the fuel cell 10, and methanol diluted with an appropriate amount of water, i.e., a methanol aqueous solution with appropriate concentration is to be supplied to the fuel cell 10. Hereinafter, all the methanol aqueous solution supplied to the anode of the fuel cell 10 and methanol stored in the fuel storage 20 are briefly referred to as fuel.

In this way, an appropriate amount of methanol, water, and air is to be supplied to the fuel cell 10 so as to prevent deterioration of the fuel cell 10 and sallow a smooth reaction in the fuel cell 10. The controller 30 controls the air pump 41, the feed pump 44, the recycle pump 43, and the water recovery pump 42 so as to adjust the amount of fuel, water, air supplied to the fuel cell 10. As illustrated in FIG. 1, the controller 30 may measure the amount of fuel that remains in the fuel storage 20 by using capacitances between at least two pairs of metal plates attached to the fuel storage 20. Also, the controller 30 may control the air pump 41, the feed pump 44, the recycle pump 43, and the water recovery pump 42 based on the measured amount of remaining fuel. Measuring of the amount of remaining fuel will now be described in more detail. The fuel cell 10 generates power by using fuel of an appropriate concentration supplied to the anode of the fuel cell 10 from the mixer 80. When the fuel cell 10 generates power, carbon dioxide ($CO_2$) that is a by-product of the reaction process, unreacted fuel, or the like may be discharged from the anode of the fuel cell 10, and water that is a by-product of the reaction process may be discharged from the cathode of the fuel cell 10.

The first separator 51 separates methanol and water from the by-product discharged from the anode of the fuel cell 10, the unreacted fuel, or the like, thereby recovering methanol and water. The by-product discharged from the cathode of the fuel cell 10 includes moisture in the form of vapor as high-temperature fluid generated due to reaction heat in the fuel cell 10. The by-product is cooled by a heat exchange process of the heat exchanger 60 while passing through the heat exchanger 60, and some water is recovered in the process. The second separator 52 separates water from the by-product cooled in this manner, thereby recovering water and discharging $CO_2$ that is the remaining by-product after the recovery process is performed, or the like to the outside. The first separator 51 and the second separator 52 may separate methanol and water from the by-product, the unreacted fuel, or the like, discharged from the fuel cell 10 by using centrifugal separation or the like. The water recovery pump 42 pumps water recovered by the second separator 52 and discharges water toward the first separator 51. Thus, fuel with low concentration in which methanol recovered by the first separator 51 and water recovered by the first separator 51 and the second separator 52 are mixed, is discharged from the first separator 51.

The fuel storage 20 may be shaped as a vessel in which the fuel is stored, such as a cylinder, box, and the like. The fuel storage 20 may be shaped as a form in which the fuel may be refilled. In addition, the fuel storage 20 may be shaped to be attached to or detached from the fuel cell system of FIG. 1, and a general fuel storage that may be attached to or detached from a fuel cell system is also referred to as a cartridge. Undiluted fuel with high concentration, for example, 100% methanol, may be stored in the fuel storage 20. As in the current embodiment, at least two pairs of metal plates may be attached to the fuel storage 20 so as to measure capacitance required for measuring the amount of fuel that remains in the fuel storage 20.

The valve module 70 is generally inserted in a position in which a fuel recycle line 91 and a fuel feed line 92 are connected to each other. The valve module 70 controls flow of the low-concentration fuel recycled from the fuel cell 10 to the fuel storage 20 via the fuel recycle line 91 and flow of the high-concentration fuel recycled from the fuel storage 20 to the fuel cell 10 via the fuel feed line 92. In this regard, the fuel recycle line 91 refers to pipes forming the path where the unreacted fuel discharged from the fuel cell 10 flows in the fuel cell 10 again, and the fuel feed line 92 refers to pipes forming the path where new fuel is supplied from the fuel storage 20 to the fuel cell 10.

The recycle pump 43 pumps at least one of the low-concentration fuel transported from the valve module 70 via the fuel recycle line 91 and the high-concentration fuel transported from the valve module 70 via the fuel feed line 92 based on the flow of the fuel controlled by the valve module 70, thereby discharging the pumped fuel to the mixer 80. The mixer 80 mixes the low-concentration fuel and the high-concentration fuel discharged from the recycle pump 43 so that appropriate concentration of fuel generated by the mixing operation may be supplied to the fuel cell 10.

Generally, the fuel cell 10 reacts normally at a predetermined temperature or higher and generates normal power. Thus, when the temperature of the fuel cell 10 is over a predetermined level after the fuel cell system of FIG. 1 has started, a normal operation in which power output from the fuel cell 10 is supplied to a load of the fuel cell 10, may be performed. The fuel is to be continuously supplied to the fuel cell 10 until the temperature of the fuel cell 10 reaches a predetermined level. When the remaining amount of fuel stored in the fuel storage 20 is not enough to raise the temperature of the fuel cell 10 to the predetermined level, the fuel cell system of FIG. 1 may not be started. In addition, when the fuel stored in the fuel storage 20 is exhausted, the reaction of the fuel cell 10 cannot be normally performed and thus, the operation of the fuel cell system is to be stopped before the fuel is exhausted.

For the above reasons, the fuel cell system is to include an apparatus for measuring the remaining amount of fuel stored in the fuel storage 20. The fuel cell system is to be started or stopped by controlling the air pump 41, the feed pump 44, the recycle pump 43, and the recovery pump 42 based on a measured value of the amount of remaining fuel. In the fuel cell system illustrated in FIG. 1, elements for measuring the remaining amount of the fuel stored in the fuel storage 20 may be installed at the controller 30 and the fuel storage 20. In addition, the fuel cell system may inform a user of the remaining operating time of the fuel cell system due to the remaining amount of the fuel based on the amount of remaining fuel measured in this manner or may output a message indicating to refill the fuel or to replace a fuel cartridge to the fuel storage 20.

As described above, the DMFC that may be miniaturized is mainly used in a portable fuel cell system. In the portable fuel cell system, a predetermined position of the fuel storage 20 may not be maintained due to movement caused by being carried by a user. In addition, when the user refills fuel in the fuel storage 20 or replaces a fuel cartridge, air may flow into the fuel storage 20 due to the user's carelessness or usage environment, and bubbles may be generated in the fuel storage 20 due to air in the fuel storage 20. Hereinafter, technical features for precisely measuring the remaining amount of the fuel stored in the fuel storage 20 regardless of a change in the position of the fuel storage 20 or bubbles generated in the fuel storage 20 will be described.

The necessity of the following technical features has been suggested from the fuel feed environment of the fuel cell system. However, the technical features may be used in devices in which the remaining amount of a certain liquid including fuel is to be detected, other than the fuel cell system. Thus, an apparatus and a method of measuring the remaining amount of liquid by generalizing fuel as the liquid will now be described in detail.

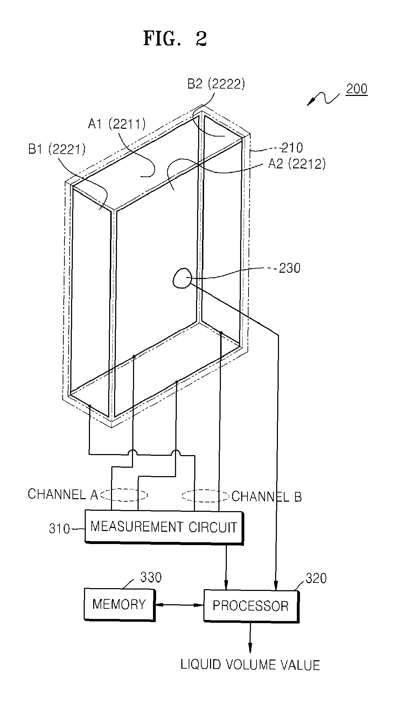

FIG. 2 illustrates a structure of an apparatus for measuring the volume of liquid according to an embodiment of the present invention. Referring to FIG. 2, the apparatus for measuring the volume of liquid according to the current embodiment includes a liquid storage 200, a measurement circuit 310, a position sensor 230, a processor 320, and a memory 330. When the apparatus for measuring the volume of liquid that will be described as below is applied to the fuel cell system of FIG. 1, the above elements may be installed at the fuel storage 20 and the controller 30 illustrated in FIG. 1. For example, the liquid storage 200 and the position sensor 230 may be installed at the fuel storage 20, and the measurement circuit 310, the processor 320, and the memory 330 may be installed at the controller 30.

The liquid storage 200 may be formed as a vessel in which the liquid is stored, such as a cylinder, box, and the like. As illustrated in FIG. 2, the liquid storage 200 may be a vessel having at least four internal faces whereby at least two pairs of conductive metal plates 2211, 2212, 2221, and 2222 may be attached to the four internal faces. Referring to FIG. 2, the liquid storage 200 includes a housing 210 having an insulation property, a pair of metal plates 2211 and 2212 attached to corresponding faces that are parallel to each other, from internal faces of the housing 210, and another one pair of metal plates 2221 and 2222 attached to the other corresponding faces that are parallel to each other, of the housing 210. Each of the pairs of the metal plates 2211 and 2212 or 2221 and 2222 may have the same or similar sizes so that capacitance therebetween are constant regardless of the position of the liquid storage 200. In other words, capacitances between the metal plates 2211 and 2212 or 2221 and 2222 having the same or similar sizes may be determined based on a material inserted therebetween.

As illustrated in FIG. 2, the area of the metal plates 2211 and 2212 or 2221 and 2222 may be smaller than the area of the internal faces of the housing 210 for insulation between the metal plates 2211, 2212, 2221, and 2222. However, the area of the metal plates 2211 and 2212 or 2221 and 2222 may have the same size as the area of the internal faces of the housing 210, if necessary. Capacitances between the metal plates 2211 and 2212 or 2221 and 2222 may be precisely measured as the area of the metal plates 2211 and 2212 or 2221 and 2222 increases in the housing 210. Thus, the area of each of the metal plates the metal plates 2211 and 2212 or 2221 and 2222 is set to be largest as possible within the range where the neighboring metal plates 2211, 2212, 2221, and 2222 may be insulated from one another.

The measurement circuit 310 electrifies the metal plates 2211 and 2212 via electric wires connected to the pair of metal plates 2211 and 2212, thereby measuring the capacitances between the metal plates 2211 and 2212. Hereinafter, the capacitances between the metal plates 2211 and 2212 are referred to as capacitance of a channel A. In addition, the measurement circuit 310 electrifies the metal plates 2221 and 2222 via electric wires connected to the pair of metal plates 2221 and 2222, thereby measuring the capacitances between the metal plates 2221 and 2222. Hereinafter, the capacitances between the metal plates 2221 and 2222 are referred to as capacitance of a channel B. There may be several methods of measuring capacitances between parallel metal plates as illustrated in FIG. 2, which are well-known and thus, a detailed description thereof will not be provided here. The capacitances between parallel metal plates illustrated in FIG. 2 may be calculated by using Equation 1. In Equation 1, $\epsilon$ represents a dielectric constant of the material inserted between the metal plates 2211 and 2212 or 2221 and 2222, i.e., a dielectric constant of a liquid, and S represents the area of the metal plates 2211 and 2212 or 2221 and 2222, and d represents a distance between the metal plates 2211 and 2212 or 2221 and 2222.

[Equation 1]

$$C = \epsilon \frac{S}{d}$$

Since the area of the pair of metal plates 2211 and 2212 or 2221 and 2222 illustrated in FIG. 2 and the distance between the pair of metal plates 2211 and 2212 or 2221 and 2222 illustrated in FIG. 2 are fixed, the capacitances between the pair of metal plates 2211 and 2212 or 2221 and 2222 illustrated in FIG. 2 are changed due to the dielectric constant of the material inserted therebetween, for example, dielectric constants of liquid and air. Thus, when the liquid storage 200 of FIG. 2 is installed in a portable device, such as a portable fuel cell system, the position of the liquid storage 200 may be changed according to a method of using the portable device, the environment in which it is used, or the like. In this regard, the dielectric constant of the material inserted between the pair of metal plates 2211 and 2212 or 2221 and 2222 illustrated in FIG. 2 may be changed due to the amount and a gradient of liquid that exists therebetween.

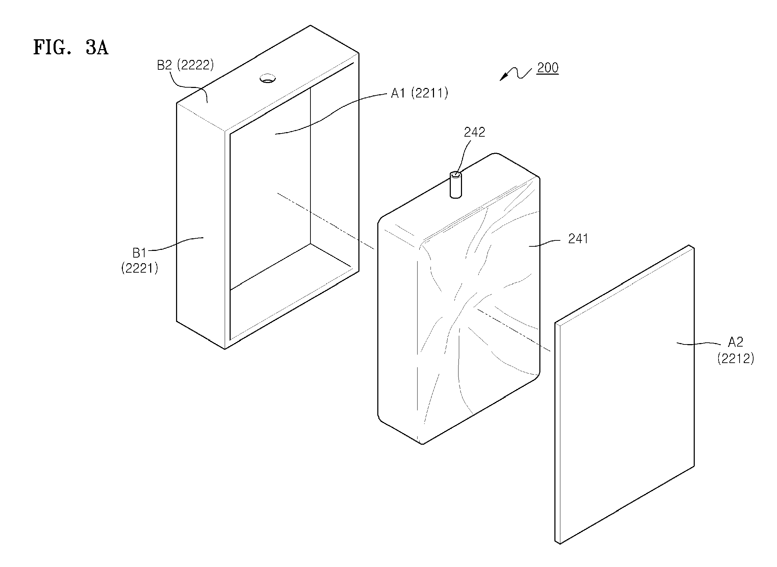

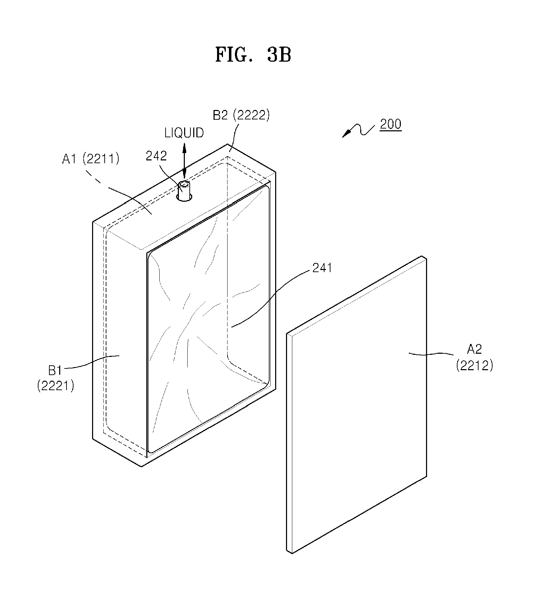

FIGS. 3A and 3B illustrate a case where a pouch 241 is installed in the liquid storage 200 illustrated in FIG. 2. The housing 210 of the liquid storage 200 may be formed of a non-flexible insulating material, such as plastic having rigidity, or the like, so as to protect material inside the housing 210. In general, an internal storage space of the liquid storage 200 may have a structure for preventing outflow of liquid (for example, may be in a sealed state). When the internal storage space of the liquid storage 200 has the structure for preventing outflow of liquid and liquid is discharged from the liquid storage 200 or is injected into the liquid storage 200, the internal storage space of the liquid storage 200 may be contracted or expanded based on a change in the volume of liquid stored in the liquid storage 200. However, when the housing 210 of the liquid storage 200 is formed of a material having rigidity, as illustrated in FIGS. 3A and 3B, the housing 210 may not be easily deformed due to the change in the volume of liquid in the liquid storage 200. Thus, the pouch 241 may be disposed in the housing 210, as illustrated in FIGS. 3A and 3B, or the housing 210 may have a structure in which gas, such as air, an inert gas, or the like, may enter and exit based on the change in the volume of liquid in the liquid storage 200.

As illustrated in FIGS. 3A and 3B, when the pouch 241 is disposed in the housing 210, the pouch 241 may be formed of an elastic material. The size of the pouch 241 may be the same as or greater than the internal size of the housing 210, and liquid is stored in the pouch 241. In addition, the pouch 241 may be formed of a non-elastic material shaped as a thin layer having a greater area than the internal size of the housing 210. For example, the pouch 241 may be formed of a non-elastic material shaped as a thin layer having the area at which all faces of the pouch 241 may be closely adhered to one another, so that bubbles may not be generated in a non-liquid state.

The pouch 241 may be formed of an elastic waterproof material, such as vinyl, rubber, or the like, in a similar form to the form of the internal space of the housing 210. Liquid is injected into or discharged from the pouch 241 via an opening 242 of the pouch 241. Thus, the pouch 241 is contracted or expanded. A gap or hole through which air enters or exits, may be formed in the housing 210 for smooth expansion and contraction of the pouch 241. The housing 210 may have one opening 242 or a plurality of openings (not shown), as illustrated in FIGS. 3A and 3B. When air enters or exits based on the change in the volume of liquid in the liquid storage 200 so that the internal storage space of the liquid storage 200 may not be contracted or expanded, the pouch 241 may not be necessary. For example, when the housing 210 is formed of material through which air is transmitted and liquid is not transmitted, the pouch 241 may not be necessary.

Referring to FIGS. 3A and 3B, part of the surface of the pouch 241 may adjoin three metal plates 2211, 2221, and 2222 among four metal plates in the housing 210 and may be fixed thereto, and the other part of the surface of the pouch 241 may not adjoin them and may not be fixed thereto. When the pouch 241 is formed of an elastic material, the pouch 241 may be attached to three metal plates 2211, 2221, and 2222 so as to fix the shape of the pouch 241, or the pouch 241 may not be attached to the metal plate 2212 so as to ease expansion and contraction of the pouch 241. When liquid in the pouch 241 is exhausted, the pouch 241 is fully contracted and compressed on the surface of the three metal plates 2211, 2221, and 2222, and when liquid flows in the pouch 241 and the pouch 241 is fully expanded, the pouch 241 has the shape of an internal space of the liquid storage 200. For example, the pouch 241 may have a rectangular box-shaped internal space as illustrated in FIGS. 3A and 3B.

As illustrated in FIGS. 3A and 3B, in each of the pair of metal plates 2221 and 2222 that correspond to the channel B, all faces at both sides of the housing 210 always adjoin the pouch 241, and the whole of one face of the metal plate 2221 and one face of the metal plate 2222 are always attached to the pouch 241. On the other hand, in each of the other one pair of metal plates 2211 and 2212 that correspond to the channel A, only the whole of one face of one metal plate 2211 is always attached to one part of the pouch 241, and a contact face between one face of the other one metal plate 2212 and part of the pouch 241 is determined based on the volume of liquid in the pouch 241. When liquid is fully filled in the pouch 241, the pouch 241 and all the faces of the metal plate 2212 may adjoin each other. However, as the volume of liquid filled in the pouch 241 is decreased, the contact area between the pouch 241 and the metal plate 2212 is gradually decreased. If the volume of liquid filled in the pouch 241 is decreased to a threshold value, the pouch 241 and the metal plate 2212 may be fully separated from each other. A structural difference between the channel A and the channel B is represented as a characteristic difference in capacitances between the channel A and the channel B.

The position sensor 230 detects the current position of the liquid storage 200. For example, the position sensor 230 detects a gradient formed by the face to which the position sensor 230 is attached, with respect to a reference face, thereby detecting the current position of the liquid storage 200. The position sensor 230 may be implemented as an acceleration sensor or the like. In FIG. 2, the position sensor 230 may be attached to the external face of the housing 210 to which the metal plate 2212 is attached. The position of the position sensor 230 is not limited to the external face of the housing 210, and the position sensor 230 may be attached to several positions other than the external face of the housing 210, if necessary.

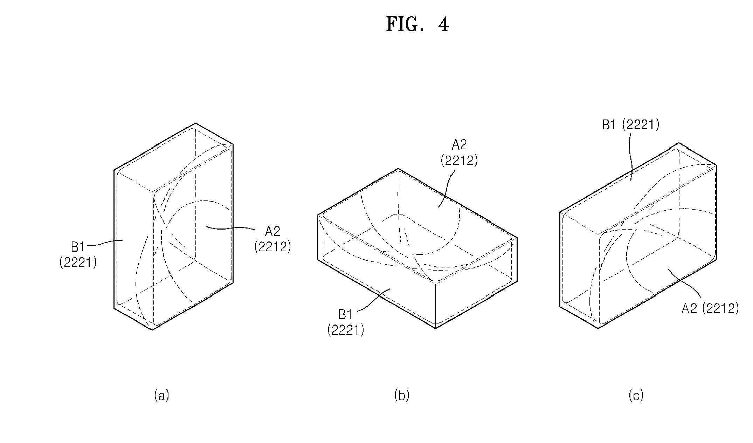

FIG. 4 illustrates several positions in which the liquid storage 200 of FIG. 2 is disposed. (a) of FIG. 4 represents a standing position in which all of the four metal plates 2211, 2212, 2221, and 2222 are standing. (b) of FIG. 4 represents a face position in which a pair of metal plates 2211 and 2212 that correspond to the channel A, among the four metal plates 2211, 2212, 2221, and 2222 are laid flat and the other one pair of metal plates 2221 and 2222 that correspond to the channel B are standing. (c) of FIG. 4 represents a side position in which a pair of metal plates 2211 and 2212 that correspond to the channel A, among the four metal plates 2211, 2212, 2221, and 2222 stand and the other one pair of metal plates 2221 and 2222 that correspond to the channel B are laid flat. Since a pair of metal plates 2211 and 2212 or 2221 and 2222 that correspond to each of the channels A and B are symmetrical with each other, which one of the pair of metal plates 2211 and 2212 or 2221 and 2222 is disposed upwards or downwards, does not affect capacitance therebetween.

In general, when a reference face is set on the position sensor 230, the position sensor 230 outputs a value that corresponds to 0 degrees when the position sensor 230 is disposed on the reference face. The reference face of the position sensor 230 may be set with a factor for manufacturing the position sensor 230 or may be input to the position sensor 230 by the user. When the reference face of the position sensor 230 is set to a face to which the position sensor 230 is attached in a standing position among three positions of the liquid storage 200 illustrated in FIG. 4, i.e., in a direction of gravity, a value detected by the magnetic sensor 230 in the standing position may be 0 degrees. Since, in the lying flat position, the direction of the face to which the position sensor 230 is attached forms 90 degrees with the direction of gravity, a value detected by the position sensor 230 may be 90 degrees. In addition, since, in the side position, the direction of the face to which the position sensor 230 is attached is the direction of gravity, a value detected by the position sensor 230 may be 0 degrees.

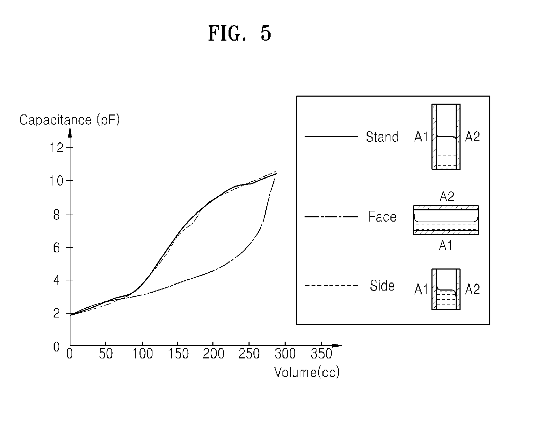

FIG. 5 is a graph of a change in measured values of capacitance of a channel A according to a change in the volume of liquid disposed in three positions illustrated in FIG. 4 in which the liquid storage 200 of FIG. 2 is disposed. In the graph of FIG. 5, the volume of methanol that remains in the liquid storage 200 in each of the three positions of the liquid storage 200 of FIG. 4, i.e., the volume of methanol stored in the pouch 241, is changed at regular intervals, and the capacitance of the channel A is measured, and then measured values of capacitance with respect to the volume of methanol are indicated on an xy-plane and are connected to one another. The measured values illustrated in FIG. 5 are just examples of measured values of capacitance in a particular experimental environment, and it will be understood by one of ordinary skill in the art that different values may be measured according to a change in the environment where capacitance is measured.

As described above, capacitances between the pair of metal plates 2211 and 2212 or 2221 and 2222 illustrated in FIG. 2 are changed by only the material inserted therebetween. Generally, the dielectric constant of air is about 1, and the dielectric constant of methanol is about 30. According to Equation 1, the capacitances between the pair of metal plates 2211 and 2212 or 2221 and 2222 illustrated in FIG. 2 in a case where only methanol exists between the metal plates 2211, 2212, 2221, and 2222 illustrated in FIG. 2 are about 30 times higher than a case where only air exists therebetween. Thus, when methanol contacts only one side of the pair of metal plates 2211 and 2212 or 2221 and 2222 and air contacts the other side thereof, the capability to store charges between the metal plates is greatly lowered due to the blocking effect of air.

When methanol does not remain in the pouch 241 or a very small amount of methanol remains therein, the pouch 241 is fully contracted, and even when the position of the liquid storage 200 is changed, the shape of the pouch 241 may not be changed. When methanol is fully filled in the pouch 241, the pouch 241 is fully expanded, and similarly, even when the position of the liquid storage 200 is changed, the shape of the pouch 241 may not be changed. In the above cases, even when the position of the liquid storage 200 is changed, the shape of the material inserted between the metal plates 2211 and 2212 is not changed. Referring to FIG. 5, when the volume of methanol stored in the pouch 241 is less than a slower limit value or greater than an upper limit value, almost the same capacitance of the channel A in all three positions of the liquid storage 200 of FIG. 4 may be detected.

On the right side of FIG. 5, when methanol is injected into the pouch 241 by about half of the whole storage volume of the liquid storage 200, the cross-sectional shape of the medium inserted between the metal plates 2211 and 2212 that correspond to the channel A in the three positions of the liquid storage 200 of FIG. 4 is shown. In this case, the pouch 241 may have a shape that corresponds to a middle state between the case where the pouch 241 is fully contracted and the case where the pouch 241 is fully expanded. Referring to FIG. 5, in the standing position and the side position among the three positions of the liquid storage 200 of FIG. 4, methanol contacts both sides of both metal plates 2211 and 2212 that correspond to the channel A with respect to the change in the volume of methanol in the liquid storage 200 so that capacitances between the metal plates 2211 and 2212 with respect to the change in the volume of methanol that remains in the pouch 241 are changed almost linearly in whole sections of the standing position and the side position. However, in the face position, the pouch 241 and the metal plate 2212 are separated from each other, and methanol contacts only the metal plate 2211, and air contacts the metal plate 2212. In other words, in a middle section of the face position, the capability to store charges between the metal plates 2211 and 2212 is greatly flowered. Thus, in the face position, capacitances between the metal plates 2211 and 2212 with respect to the change in the volume of methanol that remains in the pouch 241 are changed non-linearly in a middle section of the face position.

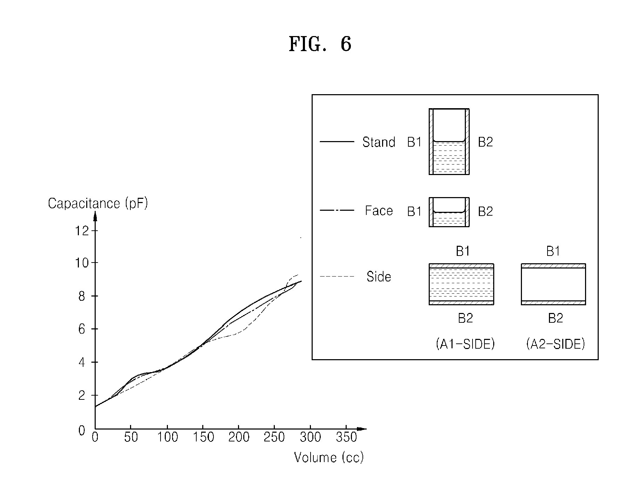

FIG. 6 is a graph of a change in measured values of capacitance of the channel B according to a change in the volume of liquid disposed in three positions of the liquid storage 200 illustrated in FIG. 4 in which the liquid storage 200 of FIG. 2 is disposed. In particular, in the graph of FIG. 6, the volume of methanol that remains in the liquid storage 200 in each of the three positions of the liquid storage 200 of FIG. 4, i.e., the volume of methanol stored in the pouch 241, is changed at regular intervals, and the capacitance of the channel B is measured, and then measured values of capacitance with respect to the volume of methanol are indicated on the xy-plane and are connected to one another. The measured values illustrated in FIG. 6 are just examples of measured values of capacitance in a particular experimental environment, and it will be understood by one of ordinary skill in the art that different values may be measured according to a change in the environment where capacitance is measured.

When methanol does not remain in the pouch 241 or a very small amount of methanol remains therein, the pouch 241 is fully contracted, and even when the position of the liquid storage 200 is changed, the shape of the pouch 241 may not be changed. When methanol is fully filled in the pouch 241, the pouch 241 is fully expanded, and similarly, even when the position of the liquid storage 200 is changed, the shape of the pouch 241 may not be changed. In the above cases, even when the position of the liquid storage 200 is changed, the shape of the material inserted between the metal plates 2221 and 2222 is not changed. Referring to FIG. 6, when the volume of methanol stored in the pouch 241 is less than a slower limit value or greater than an upper limit value, almost the same capacitance of the channel B in all three positions of the liquid storage 200 of FIG. 4 may be detected.

On the right side of FIG. 6, when methanol is injected into the pouch 241 by an amount that is about half of the whole storage volume of the liquid storage 200, the cross-sectional shape of the material inserted between the metal plates 2221 and 2222 that correspond to the channel B in the three positions of the liquid storage 200 of FIG. 4 is shown. In this case, the pouch 241 may have a shape that corresponds to a middle state between the case where the pouch 241 is fully contracted and the case where the pouch 241 is fully expanded. Referring to FIG. 6, in all three positions of the liquid storage 200 of FIG. 4, methanol contacts both sides of both metal plates 2221 and 2222 that correspond to the channel B with respect to the change in the volume of methanol in the liquid storage 200 so that capacitances between the metal plates 2221 and 2222 with respect to the change in the volume of liquid that remains in the pouch 241 are changed almost linearly in whole sections of the x-axis for all three positions. Since the pouch 241 always contacts both metal plates 2221 and 2222 and is fixed therein, methanol may contact both sides of both metal plates 2221 and 2222 that correspond to the channel B regardless of the change in the position of the liquid storage 200.

A first A1-side cross-sectional shape of the medium in the side position of FIG. 6 indicates, as a cutting plane of the pouch 241 which is cut close to the metal plate 2221, that methanol contacts both sides of both metal plates 2221 and 2222. In addition, a second A2-side cross-sectional shape of the medium in the side position of FIG. 6 indicates, as a cutting plane of the pouch 241 which is cut close to the metal plate 2222, that air contacts both sides of both metal plates 2221 and 2222. In this way, since the pouch 241 and the metal plate 2222 are separated from each other, a cross-sectional shape of the medium in the side position indicates that the amount of methanol is reduced from the metal plate 2221 to the metal plate 2222 and the ratio of air with respect to methanol is increased. Since methanol contacts both sides of both metal plates 2221 and 2222 that correspond to the channel B on the side of the metal plate 2221 so that capacitances between the metal plates 2221 and 2222 are changed almost linearly but the blocking effect of air is increased compared to other positions, and linear characteristics of the capacitances between the metal plates 2221 and 2222 are slightly lowered.

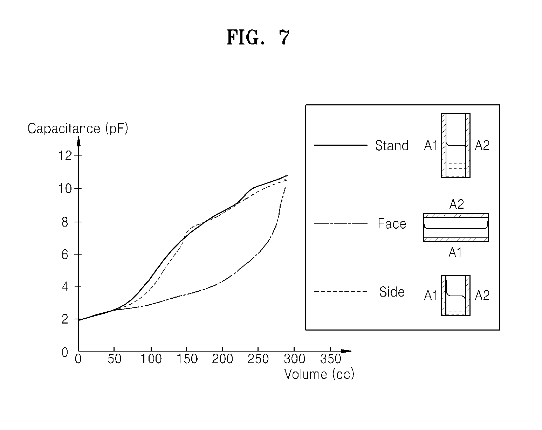

FIG. 7 is a graph of a change in measured values of capacitance of the channel A according to a change in the volume of liquid including bubbles disposed in three positions illustrated in FIG. 4 in which the liquid storage 200 of FIG. 2 is disposed. In particular, in the graph of FIG. 7, a predetermined amount of air is injected into the liquid storage 200, i.e., into the pouch 241, in each of the three positions of the liquid storage 200 of FIG. 4, and the volume of methanol stored in the pouch 241 is changed at regular intervals, and the capacitance of the channel A is measured, and then measured values of capacitance with respect to the volume of methanol are indicated on the xy-plane and are connected to one another. The measured values illustrated in FIG. 5 are just examples of measured values of capacitance in a particular experimental environment, and it will be understood by one of ordinary skill in the art that different values may be measured according to a change in the environment where capacitance is measured.

When methanol does not remain in the pouch 241 or a very small amount of methanol remains therein, the pouch 241 is fully contracted, and a small amount of methanol and air or air alone exist between the metal plates 2211 and 2212 that correspond to the channel A. In this case, even when the position of the liquid storage 200 is changed, the shape of the material inserted between the metal plates 2211 and 2212 is not changed. Referring to FIG. 7, when the volume of methanol stored in the pouch 241 is less than a slower limit value or greater than an upper limit value, almost the same capacitance of the channel A in all of the three positions of the liquid storage 200 of FIG. 4 may be detected. On the other hand, when methanol is injected into the pouch 241 until the pouch 241 is fully expanded, even when the position of the liquid storage 200 is changed, the shape of the pouch 241 is not changed. However, unlike in FIG. 5, since previously-injected air and methanol coexist in the pouch 241, movement between light air and heavy methanol in the pouch 241 occurs according to a change in the position of the liquid storage 200. Referring to FIG. 7, compared to the graph of FIG. 5, a smaller amount of methanol that corresponds to the volume of previously-injected air is injected into the pouch 241, and even when the volume of methanol stored in the pouch 241 is greater than an upper limit value, unlike in the graph of FIG. 5, similar capacitance of the channel A in three positions of the liquid storage 200 of FIG. 4 may not be detected.

On the right side of FIG. 7, when air and methanol are injected by an amount that is about half of the whole storage volume of the liquid storage 200, the cross-sectional shape of the material inserted between the metal plates 2211 and 2212 that correspond to the channel A in the three positions of the liquid storage 200 of FIG. 4 is shown. In this case, the pouch 241 may have a shape that corresponds to a middle state between the case where the pouch 241 is fully contracted and the case where the pouch 241 is fully expanded. Referring to FIG. 7, in the standing position and the side position among three positions of the liquid storage 200 of FIG. 4, methanol contacts both sides of both metal plates 2211 and 2212 that correspond to the channel A with respect to the change in the volume of methanol in the liquid storage 200 so that capacitances between the metal plates 2211 and 2212 with respect to the change in the volume of liquid that remains in the pouch 241 are changed almost linearly in whole sections of the x-axis for the standing position and the side position. However, in the face position, the pouch 241 and the metal plate 2212 are separated from each other so that methanol contacts only the metal plate 2211 and air contacts the metal plate 2212. In other words, in a middle section of the face position, the capacity to store charges between the metal plates 2211 and 2212 is greatly flowered. Thus, in the middle section of the face position, the capacitances between the metal plates 2211 and 2212 are changed non-linearly with respect to a change in the volume of methanol that remains in the pouch 241.

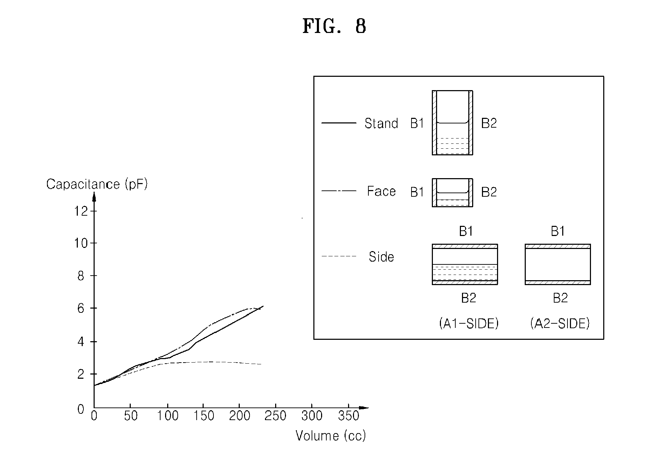

FIG. 8 is a graph of a change in measured values of capacitance of the channel B according to a change in the volume of liquid including bubbles disposed in three positions illustrated in FIG. 4 in which the liquid storage 200 of FIG. 2 is disposed. In the graph of FIG. 8, a predetermined amount of air is injected into the liquid storage 200, i.e., into the pouch 241, in each of the three positions of the liquid storage 200 of FIG. 4, and the volume of methanol stored in the pouch 241 is changed at regular intervals, and the capacitance of the channel B is measured, and then measured values of capacitance with respect to the volume of methanol are indicated on the xy-plane and are connected to one another. The measured values illustrated in FIG. 8 are just examples of measured values of capacitance in a particular experimental environment, and it will be understood by one of ordinary skill in the art that different values may be measured according to a change in the environment where capacitance is measured.

When methanol does not remain in the pouch 241 or a very small amount of methanol remains therein, the pouch 241 is fully contracted, and a small amount of methanol and air or air alone exist between the metal plates 2221 and 2222 that correspond to the channel B. In this case, even when the position of the liquid storage 200 is changed, the shape of the material inserted between the metal plates 2221 and 2222 is not changed. Referring to FIG. 8, when the volume of methanol stored in the pouch 241 is less than a slower limit value, almost the same capacitance of the channel B in all of the three positions of the liquid storage 200 of FIG. 4 may be detected. On the other hand, when methanol is injected into the pouch 241 until the pouch 241 is fully expanded, even when the position of the liquid storage 200 is changed, the shape of the pouch 241 is not changed. However, unlike in FIG. 6, since previously-injected air and methanol coexist in the pouch 241, movement between light air and heavy methanol in the pouch 241 may occur according to a change in the position of the liquid storage 200. Referring to FIG. 8, compared to the graph of FIG. 6, a smaller amount of methanol that corresponds to the volume of previously-injected air is injected into the pouch 241, and even when the volume of methanol stored in the pouch 241 is greater than an upper limit value, unlike in the graph of FIG. 6, similar capacitance of the channel B in three positions of the liquid storage 200 of FIG. 4 may not be detected

On the right side of FIG. 8, when air and methanol are injected by an amount that is about half of the whole storage volume of the liquid storage 200, the cross-sectional shape of the material inserted between the metal plates 2221 and 2222 that correspond to the channel B in the three positions of the liquid storage 200 of FIG. 4 is shown. In this case, the pouch 241 may have a shape that corresponds to a middle state between the case where the pouch 241 is fully contracted and the case where the pouch 241 is fully expanded. Referring to FIG. 8, in the standing position and the face position among three positions of the liquid storage 200 of FIG. 4, methanol contacts both sides of both metal plates 2221 and 2222 that correspond to the channel B with respect to the change in the volume of methanol in the liquid storage 200 so that capacitances between the metal plates 2221 and 2222 with respect to the change in the volume of liquid that remains in the pouch 241 are changed almost linearly in whole sections of the x-axis for the standing position and the face position. Since the pouch 241 contacts both metal plates 2221 and 2222 that correspond to the channel B and are fixed therein, methanol always contacts both sides of both metal plates 2221 and 2222 that correspond to the channel B regardless of the change in the position of the liquid storage 200.

On the other hand, a first cross-sectional shape of the medium in the side position of FIG. 8 indicates, as a cutting plane of the pouch 241 which is cut close to the metal plate 2211, that methanol contacts only the metal plates 2221 and air contacts only the metal plate 2222. Unlike the first cross-sectional shape of the medium in the side position of FIG. 6, air contacts the metal plate 2222 due to previously-injected air. In addition, a second cross-sectional shape of the medium in the side position of FIG. 8 indicates, as a cutting plane of the pouch 241 which is cut close to the metal plate 2212, that air contacts both sides of both metal plates 2221 and 2222. In this way, since the pouch 241 and the metal plate 2212 may be separated from each other and a predetermined amount of air is injected into the pouch 241, air always contacts the metal plate 2221. Thus, in almost whole sections of the side position except for a section in which the pouch 241 is fully contracted, the capacitances between the metal plates 2221 and 2222 are changed non-linearly with respect to a change in the volume of methanol that remains in the pouch 241.

The result of observing changes of measured values of each channel according to a change in the volume of liquid illustrated in FIGS. 5 through 8 is as follows. First, when methanol does not remain in the pouch 241 or a very small amount of methanol remains in the pouch 241, the pouch 241 is fully contracted, and even when the position of the liquid storage 200 is changed, the shape of the pouch 241 is not changed. In this regard, capacitance between the metal plates 2211 and 2212 that corresponds to the channel A and capacitance between the metal plates 2221 and 2222 that corresponds to the channel B are precisely measured. In general, measuring of the remaining amount of liquid is more significant when the volume of liquid that remains in the liquid storage 200 is small.

Next, in all whole sections of the standing position among three positions of the liquid storage 200 of FIG. 4, the capacitance between the metal plates 2211 and 2212 that corresponds to the channel A and the capacitance between the metal plates 2221 and 2222 that corresponds to the channel B may be precisely measured. Next, in the face position, the capacitance between the metal plates 2221 and 2222 that corresponds to the channel B have more linear characteristics than in the capacitance between the metal plates 2211 and 2212 that corresponds to the channel A. Last, in the side position, the capacitance between the metal plates 2211 and 2212 that corresponds to the channel A is less affected by bubbles, such as air injected into the liquid storage 200, than the capacitance between the metal plates 2221 and 2222 that corresponds to the channel B. As described above, such a difference between characteristics of the channel A and the channel B may occur due to a change in the material inserted between the pair of metal plates 2211 and 2212 or 2221 and 2222 generated when liquid in the liquid storage 200 or air moves according to the change in the position of the liquid storage 200.

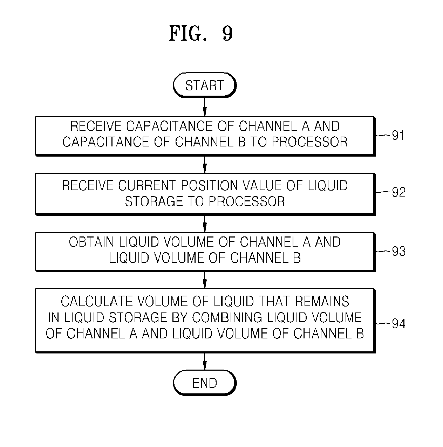

In FIG. 2, in order to precisely measure the volume of the fuel stored in the liquid storage 200 in any of three positions of the liquid storage 200, the processor 320 calculates the volume of liquid stored in the liquid storage 200 by finding a combination of liquid volumes corresponding to the capacitance of the channel A and the capacitance of the channel B that are most appropriate to the current position of the liquid storage 200 based on the current position of the liquid storage 200 detected by the position sensor 230. For example, the processor 320 may increase a weight of the liquid volume corresponding to the capacitance of a channel for providing a more precise value of capacitances. The detailed operation of the processor 320 will now be described with reference to FIG. 9.

FIG. 9 is a flowchart illustrating a method of measuring the volume of liquid according to an embodiment of the present invention. Referring to FIG. 9, the method of measuring the volume of liquid according to the current embodiment may include operations processed according to time. Thus, although omitted, the description of the apparatus for measuring the volume of liquid illustrated in FIG. 2 may also be applied to the method of FIG. 9. When the following method is applied to the fuel cell system of FIG. 1, the following operations may be performed by the controller 30 of the fuel cell system of FIG. 1. The controller 30 includes the function of the processor 320 of FIG. 2 and may also perform operations of controlling BOP as well as the following operations.

In operation 91, capacitance between the metal plates 2211 and 2212 that corresponds to the channel A and capacitance between the metal plates 2221 and 2222 that corresponds to the channel B are input to the processor 210 by the measurement circuit 310. In operation 92, a value indicating the current position of the liquid storage 200 is input to the processor 320 by the position sensor 230. For example, the value indicating the current position of the liquid storage 200 may be a gradient of the parallel metal plates 2211 and 2212 that correspond to the channel A, based on the direction of gravity, i.e., a gradient of the face of the housing 210 to which the parallel metal plates 2211 and 2212 are attached.

In operation 93, the processor 320 obtains a liquid volume corresponding to the capacitance of the channel A and a liquid volume corresponding to the capacitance of the channel B input in operation 91, based on a change in the capacitance of the channel A and a change in the capacitance of the channel B due to a change in the remaining amount of liquid in the liquid storage 200. For example, the processor 320 reads the liquid volume corresponding to the capacitance of the channel A and the liquid volume corresponding to the capacitance of the channel B input in operation 91, from a database established with change values of the capacitance of the channel A and a change in the capacitance of the channel B due to the change in the remaining amount of liquid in the liquid storage 200, thereby obtaining the liquid volume corresponding to the capacitance of the channel A and the liquid volume corresponding to the capacitance of the channel B. Alternatively, the processor 320 inputs the capacitance of the channel A and the capacitance of the channel B input in operation 91, in a function indicating the change in the capacitance of the channel A and the change in the capacitance of the channel B due to the change in the remaining amount of liquid in the liquid storage 200, thereby obtaining the liquid volume corresponding to the capacitance of the channel A and the liquid volume corresponding to the capacitance of the channel B.

As illustrated in FIGS. 5 and 6, the capacitance of the channel A and the capacitance of the channel B according to their liquid volumes by changing the volume of liquid stored in the liquid storage 200 in predetermined units in several positions of the liquid storage 200 of FIG. 4. The measured capacitance may be established in a table form in which the capacitance of the channel A and the capacitance of the channel B are mapped to the volume of liquid changed in predetermined units. Since the capacitances stored in the database are discrete values, the processor 320 may predict liquid volumes that correspond to the capacitance of the channel A and the capacitance of the channel B input in operation 91, from liquid volumes corresponding to capacitance that is most similar to the capacitance of the channel A and the capacitance of the channel B when the capacitance of the channel A and the capacitance of the channel B input in operation 91 have not been found from the database. For example, the processor 320 may calculate the liquid volume corresponding to the capacitance of the channel A from an average between liquid volumes corresponding to two capacitances in which the capacitance of the channel A input in operation 91 exist in a middle position of the two capacitances.

Alternatively, the measured capacitance may be expressed as a function indicating the change in the capacitance of the channel A and a function indicating the change in the capacitance of the channel B due to the change in the remaining amount of liquid in the liquid storage 200. The measured values illustrated in FIGS. 7 and 8 are obtained in a state where bubbles exist in the liquid storage 200. Such bubbles are usually generated due to the user's carelessness or characteristics of the usage environment and thus, the volume of the bubbles cannot be predicted. Thus, the measured values of FIGS. 7 and 8 are values that are variable according to the volume of the bubbles that exist in the liquid storage 200. In the current embodiment, the database may be established or a function may be determined by using values measured in an optimal state where there are no bubbles.

In operation 94, the processor 320 calculates the volume of liquid that remains in the liquid storage 200 by combining the liquid volume of the channel A and the liquid volume of the channel B obtained in operation 93 based on the current position of the liquid storage 200 detected by the position sensor 230. More specifically, the processor 320 may calculate a weight of the liquid volume of the channel A and a weight of the liquid volume of the channel B based on the current position of the liquid storage 200 detected by the position sensor 230 and may calculate the volume of liquid that remains in the liquid storage 200 by combining the liquid volume of the channel A and the liquid volume of the channel B to which the weight is respectively applied. The weight of the liquid volume of the channel A and the weight of the liquid volume of the channel B may be calculated from a gradient of the metal plates 2211 and 2212 that correspond to the channel A and a gradient of the metal plates 2221 and 2222 that correspond to the channel B.

For example, the processor 320 may calculate the volume of liquid that remains in the liquid storage 200 by multiplying a liquid volume V1 of the channel A by a weight k1, a liquid volume V2 of the channel B by a weight k2, and by adding up the liquid volume V1 of the channel A by which the weight k1 is multiplied and the liquid volume V2 of the channel B by which the weight k2 is multiplied by using Equation 2 below. In Equation 2, $\theta_1$ represents the gradient of the metal plates 2211 and 2212 that correspond to the channel A with respect to a vertical face, and $\theta_2$ represents the gradient of the metal plates 2221 and 2222 that correspond to the channel B with respect to a vertical face.

[Equation 2]

$$\text{Volume} = k1*V1 + k2*V2 \ \left( k1 = \frac{\cos\theta_1}{\cos\theta_1 + \cos\theta_2} , \ k2 = 1 - k1 \right)$$

In the standing position among three positions of the liquid storage 200 of FIG. 4, all of $\theta_1$ and $\theta_2$ are 0 degrees. In other words, in the standing position, the weight k1 of the liquid volume V1 of the channel A is 0.5, and the weight k2 of the liquid volume V2 of the channel B is 0.5. Thus, the processor 320 may calculate the volume of liquid that remains in the liquid storage 200 by adding up the liquid volume of the channel A and the liquid volume of the channel B by which the same weight is multiplied. This means that the capacitance between the metal plates 2211 and 2212 that corresponds to the channel A and the capacitance between the metal plates 2221 and 2222 are precisely measured in whole sections of the standing position.

In the face position among three positions of the liquid storage 200 of FIG. 4, $\theta_1$ is 90 degrees, and $\theta_2$ is 0 degrees. In other words, in the face position, the weight k1 of the liquid volume V1 of the channel A is 0, and the weight k2 of the liquid volume V2 of the channel B is 1. Thus, the processor 320 may calculate the volume of liquid that remains in the liquid storage 200 by using only the liquid volume of the channel B. This means that, in the face position, the capacitance between the metal plates 2221 and 2222 that corresponds to the channel B have more linear characteristics than in the capacitance between the metal plates 2211 and 2212 that corresponds to the channel A.

In the side position among three positions of the liquid storage 200 of FIG. 4, $\theta_1$ is 0 degrees, and $\theta_2$ is 90 degrees. In other words, in the side position, the weight k1 of the liquid volume V1 of the channel A is 1, and the weight k2 of the liquid volume V2 of the channel B is 0. Thus, the processor 320 may calculate the volume of liquid that remains in the liquid storage 200 by using only the liquid volume of the channel A. This means that, in the side position, the capacitance between the metal plates 2211 and 2212 that corresponds to the channel A are less affected by bubbles, such as air injected into the liquid storage 200, than the capacitance between the metal plates 2221 and 2222 that corresponds to the channel B.

According to Equation 2, the processor 320 increases or decreases the weight k1 of the liquid volume V1 of the channel A and decreases or increases the weight k2 of the liquid volume V2 of the channel B according to a change in the gradient $\theta_1$ of the metal plates 2211 and 2212 and the gradient $\theta_2$ of the metal plates 2221 and 2222 that are continuously changed as the position of the liquid storage 200 is changed from one position to another. For example, as the position of the liquid storage 200 is changed from the face position to the side position, the weight k1 of the liquid volume V1 of the channel A may increase, and the weight k2 of the liquid volume V2 of the channel B may decrease. In this way, the processor 320 adjusts the weight k1 of the liquid volume V1 of the channel A and the weight k2 of the liquid volume V2 of the channel B in consideration of the gradient $\theta_1$ of the metal plates 2211 and 2212 and the gradient $\theta_2$ of the metal plates 2221 and 2222 that are continuously changed and thus may calculate the volume of liquid that remains in the liquid storage 200 precisely in any of the three positions of the liquid storage 200.

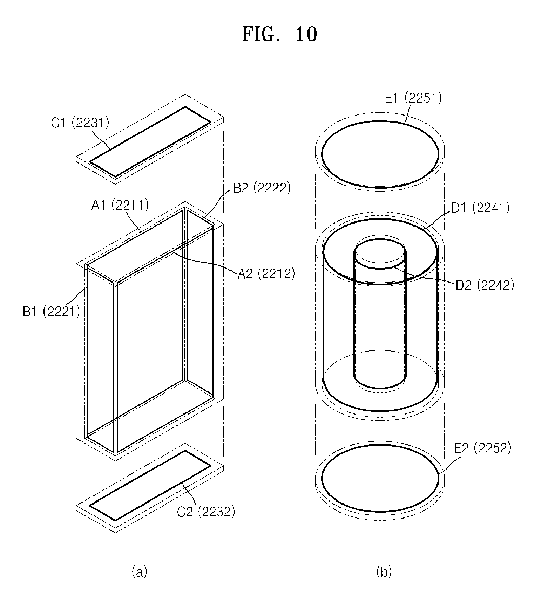

FIG. 10 illustrates a structure of an apparatus for measuring the volume of liquid according to other embodiments of the present invention. As described above, the apparatus for measuring the volume of liquid of FIG. 2 may measure the volume of liquid that remains in the liquid storage 200 by using the capacitances of two channels A and B from the two pairs of metal plates 2211 and 2212 and 2221 and 2222. The apparatus for measuring the volume of liquid of FIG. 2 may measure the remaining amount of liquid precisely in any of the three positions of the liquid storage 200 by giving a higher weight to the capacitance of a channel for providing a more precise remaining amount of liquid to the current position of the liquid storage 200 between the capacitances of two channels A and B. Thus, when capacitances of more channels can be obtained from the liquid storage 200, a more precise liquid remaining amount with respect to the current position of the liquid storage 200 may be calculated. (a) of FIG. 10 shows an embodiment in which a new pair of metal plates 2231 and 2232 are attached to each of top and bottom surfaces of the liquid storage 200 so as to add capacitance of a channel C, i.e., third capacitance to the capacitance of the channel A and the capacitance of the channel B of the apparatus for measuring the volume of liquid of FIG. 2.

The shape of the liquid storage 200 of the apparatus for measuring the volume of liquid of FIG. 2 is rectangular parallelepiped, and first corresponding faces to which a pair of metal plates for measuring first capacitance are attached, and second corresponding faces to which another pair of metal plates for measuring second capacitance are disposed vertically, as illustrated in FIG. 2. However, such a shape is not required to measure the volume of liquid that remains in the liquid storage 200 by using capacitances of a plurality of channels. A pair of metal plates attached to internal faces of the liquid storage 200 of FIG. 2 corresponds to a parallel plate capacitor. There are various shapes of capacitors in addition to the parallel plate capacitor of FIG. 2. For example, a metal plate 2241 attached to internal curved faces of a cylindrical liquid storage and a metal plate 2242 attached to external curved faces of a circular cylinder inside the liquid storage, as illustrated in (b) of FIG. 10, constitute a cylindrical capacitor that corresponds to a channel D. Metal plates 2251 and 2252 attached to each of top and bottom surfaces of the cylindrical liquid storage illustrated in (b) of FIG. 10 constitute a parallel plate capacitor that corresponds to a channel E.

It will be understood from the above-described embodiments by one of ordinary skill in the art that an apparatus for measuring the volume of liquid that remains in the liquid storage 200 can be designed by using shapes of capacitors other than the capacitor shapes illustrated in FIGS. 2 through 10.

According to the above embodiments, the volume of liquid stored in the liquid storage 200 is calculated using a plurality of capacitances between several pairs of metal plates attached to the liquid storage 200 based on the current position of the liquid storage 200 so that the volume of liquid stored in the liquid storage 200 can be precisely measured in any of three positions of the liquid storage 200. The volume of liquid stored in the liquid storage 200 is calculated by finding a combination of liquid volumes corresponding to the plurality of capacitances that are most appropriate to the current position of the liquid storage 200 so that the volume of liquid stored in the liquid storage 200 can be more precisely measured compared to a case where one capacitance is used. Furthermore, when the amount of liquid that remains in the liquid storage 200 is small, the volume of liquid stored in the liquid storage 200 can be more precisely measured. In addition, a weight of a liquid volume corresponding to capacitances that are not or less affected by bubbles in the liquid storage 200 among the plurality of capacitances is increased so that the remaining amount of liquid stored in the liquid storage 200 can be precisely measured without the effect of bubbles that may exist in the liquid storage 200 or with a minimum effect of bubbles.

In this way, in the above embodiments, the remaining amount of liquid stored in the liquid storage 200 can be precisely measured without the effect of bubbles in the liquid storage 200 or with the minimum effect of bubbles in any of the three positions of the liquid storage 200. The method and apparatus for measuring the volume of liquid are very suitable for measuring the amount of fuel that remains in a portable fuel cell system in which there is a large change in a position of a liquid storage due to a user and a large amount of bubbles are generated due to replacement of a fuel cartridge.

The method of measuring the volume of liquid performed by the processor 320 can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in a descriptive sense only and not for purposes of limitation. Therefore, the scope of the invention is defined not by the detailed description of the invention but by the appended claims, and all differences within the scope will be construed as being included in the present invention.

**Claims**

1.  A method of measuring a volume of liquid, the method comprising:

    measuring a first capacitance between metal plates attached to a liquid storage and a second capacitance between further metal plates attached to the liquid storage;
    determining a first liquid volume corresponding to the first capacitance and a second liquid volume corresponding to the second capacitance; and
    calculating a volume of liquid that remains in the liquid storage by combining the determined plurality of liquid volumes including the first liquid volume and the second liquid volume.

2.  The method of claim 1, wherein the calculating of the volume of liquid comprises:

    calculating a weight of each of the plurality of liquid volumes based on a current position of the liquid storage; and
    calculating the volume of liquid by combining the determined plurality of liquid volumes to which each calculated weight is applied.

3.  The method of claim 2, wherein the calculating of the volume of liquid comprises:

    calculating the volume of liquid by adding up the determined plurality of liquid volumes by which each calculated weight is multiplied or calculating the current position of the liquid storage from a gradient of the metal plates and a gradient of the further metal plates.

4.  The method of any of claims 1-3, wherein the metal plates are attached to each of first corresponding faces of the liquid storage, and the further metal plates are attached to each of second corresponding faces of the liquid storage.

5.  The method of any of claims 1-4, wherein the determining of the first liquid volume and the second liquid volume comprises determining the first liquid volume and the second liquid volume from a change in the first capacitance and the second capacitance due to a change in an amount of liquid that remains in the liquid storage.

6.  The method of claim 5, wherein the determining of the first liquid volume and the second liquid volume comprises obtaining the first liquid volume and the second liquid volume from:

    a database comprising values of the change in the first capacitance and the second capacitance due to a change in an amount of liquid that remains in the liquid storage; or.
    a function indicating the change in the first capacitance and the second capacitance due to a change in an amount of liquid that remains in the liquid storage.

7.  A computer-readable recording medium having recorded thereon a program for, when executed on a computer, implementing the method of any of claims 1-6.

8.  An apparatus for measuring a volume of liquid, the apparatus comprising:

    a first pair of metal plates attached to a liquid storage for measurement of first capacitance;
    a second pair of metal plates attached to the liquid storage for measurement of second capacitance; and
    a processor adapted to calculate a volume of liquid in the liquid storage from the first capacitance measurement and the second capacitance measurement.

9. The apparatus of claim 8, wherein the liquid storage comprises a housing having an insulation property, and the first pair of metal plates are attached to first corresponding faces among internal faces of the housing, and the second pair of metal plates are attached to second corresponding faces among the internal faces of the housing.

10. The apparatus of claim 8 or 9, wherein a further pair of metal plates is further attached to the liquid storage for measurement of a third capacitance.

11. The apparatus of any of claims 8-10, wherein the liquid storage further comprises:

a housing having an insulation property; and
a pouch having elasticity which is located in the housing and which is arranged for storing liquid.

12. The apparatus of any of claims 8-11, further comprising a position sensor for detecting a current position of the liquid storage.

13. The apparatus of claim 12, wherein the position sensor is attached to one of faces of the liquid storage and is adapted to detect the current position of the liquid storage by detecting a gradient formed by the attached face with respect to a reference face.

14. The apparatus of claim 12 or 13, wherein the processor is adapted to measure an amount of liquid in the liquid storage by combining liquid volumes corresponding to the first and second capacitances based on the current position of the liquid storage.

15. A fuel cell system comprising the apparatus of any of claims 10-14, wherein the liquid is fuel for said fuel cell system.

# FIG. 1

SECOND SEPARATOR  52

RECOVERY PUMP  42

PIPE

SIGNAL LINE

HEX  60

51 FUEL RECYCLE LINE (91)

FIRST SEPARATOR

VALVE MODULE  70

C  A  10

FUEL CELL

MIXER  80

RECYCLE PUMP  43

FUEL FEED LINE (92)

CONTROLLER  30

AIR PUMP  41

FUEL STORAGE  20

FEED PUMP  44

FIG. 2

FIG. 3A

B2 (2222)

A1 (2211)

242

241

B1
(2221)

A2
(2212)

200

EP 2 511 675 A1

## FIG. 3B

# FIG. 4

(a)

(b)

(c)

FIG. 5

EP 2 511 675 A1

FIG. 6

FIG. 7

FIG. 8

FIG. 9

```
            ┌─────────┐
            │  START  │
            └─────────┘
                 │
                 ▼
┌──────────────────────────────────────────┐
│  RECEIVE CAPACITANCE OF CHANNEL A AND      │── 91
│  CAPACITANCE OF CHANNEL B TO PROCESSOR     │
└──────────────────────────────────────────┘
                 │
                 ▼
┌──────────────────────────────────────────┐
│  RECEIVE CURRENT POSITION VALUE OF LIQUID  │── 92
│  STORAGE TO PROCESSOR                      │
└──────────────────────────────────────────┘
                 │
                 ▼
┌──────────────────────────────────────────┐
│  OBTAIN LIQUID VOLUME OF CHANNEL A AND     │── 93
│  LIQUID VOLUME OF CHANNEL B                │
└──────────────────────────────────────────┘
                 │
                 ▼
┌──────────────────────────────────────────┐
│  CALCULATE VOLUME OF LIQUID THAT REMAINS   │
│  IN LIQUID STORAGE BY COMBINING LIQUID     │── 94
│  VOLUME OF CHANNEL A AND LIQUID VOLUME     │
│  OF CHANNEL B                              │
└──────────────────────────────────────────┘
                 │
                 ▼
            ┌─────────┐
            │   END   │
            └─────────┘
```

FIG. 10

(a)

(b)

Europäisches
Patentamt

European
Patent Office

Office européen
des brevets

## EUROPEAN SEARCH REPORT

Application Number

EP 12 16 3611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 45 970 A1 (PLOECHINGER HEINZ DIPL ING [DE] PLOECHINGER HEINZ [DE]) 14 May 1998 (1998-05-14) * column 1, line 23 - line 34 * * column 4, line 6 - line 55 * * column 6, line 19 - line 35; figure 6a * * column 7, line 54 - column 8, line 2; figure 9 * ----- | 1-15 | INV. G01F23/26 H01M8/04 |
| X | EP 1 722 203 A2 (JOMA POLYTEC KUNSTSTOFFTECHNIK [DE]; BAYERISCHE MOTOREN WERKE AG [DE];) 15 November 2006 (2006-11-15) * paragraph [0006] * * paragraph [0018] - paragraph [0022]; figure 1 * ----- | 1-3,5-8, 10-15 | |
| X | EP 0 303 874 A1 (FIAT AUTO SPA [IT]) 22 February 1989 (1989-02-22) * page 2, line 34 - line 54; figure 1 * * page 4, line 30 - line 47 * ----- | 1-3,5-8, 10 | |
| X | US 5 635 962 A (GOLDIS YALE N [US]) 3 June 1997 (1997-06-03) * column 1, line 66 - line 7, paragraph 2; figures 1-3 * ----- | 1-3,5-8, 10,11 | TECHNICAL FIELDS SEARCHED (IPC) G01F H01M |
| X | US 5 495 745 A (HUGHES IVOR [US]) 5 March 1996 (1996-03-05) * column 3, line 39 - line 59 * * column 5, line 63 - column 6, line 18 * ----- | 1,7,8, 12-14 | |
| A | US 2007/272008 A1 (TUNG CHUN-CHIN [TW]) 29 November 2007 (2007-11-29) * paragraph [0009] - paragraph [0014] * ----- | 6,15 | |

The present search report has been drawn up for all claims

| Place of search | Date of completion of the search | Examiner |
|---|---|---|
| The Hague | 6 August 2012 | Bourhis, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 12 16 3611

This annex lists the patent family members relating to the patent documents cited in  the above-mentioned European search report.
The members are as contained in the European Patent Office EDP file on
The European Patent Office is in no way liable for these particulars which are merely given for the purpose of information.

06-08-2012

| Patent document cited in search report | | Publication date | Patent family member(s) | | Publication date |
|---|---|---|---|---|---|
| DE 19645970 | A1 | 14-05-1998 | NONE | | |
| EP 1722203 | A2 | 15-11-2006 | DE 102005022933 A1 | | 16-11-2006 |
| | | | EP 1722203 A2 | | 15-11-2006 |
| EP 0303874 | A1 | 22-02-1989 | BR 8803994 A | | 28-02-1989 |
| | | | DE 3867965 D1 | | 05-03-1992 |
| | | | EP 0303874 A1 | | 22-02-1989 |
| | | | ES 2028205 T3 | | 01-07-1992 |
| | | | IT 1211347 B | | 18-10-1989 |
| | | | JP 1138422 A | | 31-05-1989 |
| | | | US 4935727 A | | 19-06-1990 |
| US 5635962 | A | 03-06-1997 | DE 19615162 A1 | | 30-01-1997 |
| | | | GB 2303709 A | | 26-02-1997 |
| | | | JP 2926004 B2 | | 28-07-1999 |
| | | | JP 9033315 A | | 07-02-1997 |
| | | | US 5635962 A | | 03-06-1997 |
| US 5495745 | A | 05-03-1996 | NONE | | |
| US 2007272008 | A1 | 29-11-2007 | JP 3128770 U | | 25-01-2007 |
| | | | TW M307199 U | | 01-03-2007 |
| | | | US 2007272008 A1 | | 29-11-2007 |

EPO FORM P0459

For more details about this annex : see Official Journal of the European Patent Office, No. 12/82